# EUROPÄISCHE PATENTSCHRIFT

(11) **EP 3 553 019 B1**
(45) Veröffentlichungstag und Bekanntmachung des Hinweises auf die Patenterteilung: **24.03.2021**
(21) Anmeldenummer: 19166522.3
(22) Anmeldetag: 01.04.2019
(51) Int. Cl.: B66F 9/075, B62D 33/06

(54) **FLURFÖRDERZEUG MIT EINEM EINE FAHRERSTANDPLATTFORM UMFASSENDEN FAHRERARBEITSPLATZ**
INDUSTRIAL TRUCK WITH A DRIVER WORKPLACE COMPRISING A DRIVER STANDING PLATFORM
CHARIOT DE MANUTENTION DOTÉ D'UN POSTE DE TRAVAIL DE CONDUCTEUR COMPRENANT UNE PLATEFORME SUPPORT DE CONDUCTEUR

(30) Priorität: 10.04.2018 DE 102018108469; 25.05.2018 DE 102018112548
(43) Veröffentlichungstag der Anmeldung: 16.10.2019
(73) Patentinhaber: STILL S.p.A., 20020 Lainate (MI) (IT)
(72) Erfinder: MARIOTTI, Fabio, 42016 Guastalla RE (IT); ZANOLO, Graziano, 46039 Villimpenta (IT); FONTANESI, Filipo, 43100 Parma (IT)
(74) Vertreter: Patentship Patentanwaltsgesellschaft mbH

(56) Entgegenhaltungen:
- EP-A2- 1 731 477
- EP-A2- 2 671 783
- JP-A- H1 046 628
- JP-A- H11 255 491
- US-A- 4 018 473

## Beschreibung

Die Erfindung betrifft ein Flurförderzeug mit einem Fahrerarbeitsplatz, der eine Fahrerstandplattform für eine stehende Bedienperson umfasst und an einem Antriebsteil des Flurförderzeugs in Längsrichtung des Flurförderzeugs zwischen einem Batteriefach einer Traktionsbatterie und einer vertikalen Rückwand des Antriebsteils angeordnet ist, wobei der Fahrerarbeitsplatz an dem Antriebsteil mittels eines Hubantriebs anhebbar und absenkbar angeordnet ist.

Derartige Flurförderzeuge mit einem eine Fahrerstandplattform aufweisenden Fahrerstand werden von einer auf der Fahrerstandplattform stehenden Bedienperson bedient. Bei derartigen Flurförderzeugen ist es gewünscht, die Fahrerstandplattform bzw. den Fahrerarbeitsplatz gefedert an dem Antriebsteil aufzuhängen, um durch eine gefederte Aufhängung der Fahrerstandplattform bzw. des Fahrerarbeitsplatzes am Antriebsteil die auf die Bedienperson, die auf der Fahrerstandplattform steht, einwirkenden Schwingungen und Vibrationen im Betrieb des Flurförderzeugs mittels zu reduzieren, beispielsweise wenn mit dem Flurförderzeug über Bodenunebenheiten gefahren wird.

Um die Fahrerstandplattform bzw. den Fahrerarbeitsplatz gefedert an dem Antriebsteil des Flurförderzeugs aufzuhängen, ist es bereits bekannt, den Hubantrieb, der in der Regel von einem Hydraulikzylinder gebildet, hydraulisch an einen Hydrospeicher anzuschließen. Derartige hydraulische Federeinrichtungen und hydraulische Federungssysteme unter Verwendung eines Hydrospeichers weisen jedoch einen komplexen Aufbau mit hohen Herstellkosten auf, sind schwierig zu regeln und verkomplizieren den Aufbau der Hydraulikanlage, da ein Hydrospeicher in den Hydraulikreis des Hubantriebs zu integrieren ist. Weiterhin ist ein Hydrospeicher schwer abzustimmen und schwer an sich verändernde Bedingungen anzupassen, beispielsweise wechselnde Körpergewichte von Fahrern.

EP1731477A2 offenbart ein Flurförderzeug gemäß dem Oberbegriff des Anspruchs 1.

Der vorliegenden Erfindung liegt die Aufgabe zugrunde, ein Flurförderzeug der eingangs genannten Gattung zur Verfügung zu stellen, das eine gefederte Aufhängung des Fahrerarbeitsplatzes bei geringem Bauaufwand ermöglicht und die genannten Nachteile vermeidet.

Diese Aufgabe wird erfindungsgemäß dadurch gelöst, dass der Hubantrieb mittels einer Linearführung in vertikaler Richtung bewegbar an dem Antriebsteil angeordnet ist und der Hubantrieb unter Zwischenschaltung eines Federelements in vertikaler Richtung an dem Antriebsteils abgestützt ist.

Erfindungsgemäß ist somit der Hubantrieb in vertikaler Richtung bewegbar am Antriebsteil angeordnet und der Hubantrieb stützt sich unter Zwischenschaltung eines Federelements in vertikaler Richtung an dem Antriebsteils ab. Dies ermöglicht eine Federung des Fahrerarbeitsplatzes mit einem einfachen Aufbau, da ein die Federungsfunktion des Fahrerarbeitsplatzes erzielendes Federelement auf einfache Weise und mit geringem zusätzlichen Bauaufwand zwischen dem Hubantrieb und dem Antriebsteil angeordnet und eingebaut werden kann.

Gemäß einer vorteilhaften Ausführungsform der Erfindung ist der Hubantrieb als Hydraulikzylinder ausgebildet, der ein Zylindergehäuse und eine ausfahrbare Kolbenstange umfasst, wobei das Zylindergehäuse mittels der Linearführung in vertikaler Richtung bewegbar an dem Antriebsteil angeordnet ist und das Zylindergehäuse unter Zwischenschaltung des Federelements in vertikaler Richtung an dem Antriebsteil abgestützt ist, wobei die ausfahrbare Kolbenstange mit dem anhebbaren und absenkbaren Fahrerarbeitsplatz verbunden ist. Das Federelement ist somit zwischen dem vertikal beweglichen Zylindergehäuse des Hydraulikzylinders, mit dem der Fahrerarbeitsplatz angehoben und abgesenkt werden kann, und dem Antriebsteil angeordnet und eingebaut. Diese führt zu einem einfachen und kostengünstigen Aufbau der Federung des Fahrerarbeitsplatzes und vermeidet die Nachteile, die sich mit einem hydraulisch an den Hubzylinder angeschlossenen Hydrospeicher zur Federung des Fahrerarbeitsplatzes ergeben.

Mit besonderem Vorteil ist gemäß einer vorteilhaften Ausgestaltungsform der Erfindung das Federelement an der Unterseite des Hubantriebs angeordnet. Bei der Ausführung des Hubantriebs als Hubzylinder ist somit das Federelement zwischen der Unterseite des Zylindergehäuses des Hubzylinders, das in vertikaler Richtung bewegbar am Antriebsteil angeordnet ist, und dem Antriebsteil angeordnet. Dadurch ergibt sich ein einfacher und kostengünstiger Aufbau.

Gemäß einer vorteilhaften Ausführungsform der Erfindung ist das Antriebsteil mit zwei vertikalen Führungsprofilen versehen, die in Fahrzeugquerrichtung voneinander beabstandet sind und an denen der Fahrerarbeitsplatz anhebbar und absenkbar geführt ist. Die zwei vertikalen Führungsprofile bilden somit einen an dem Antriebsteil angeordneten Standmast, an dem der Fahrerarbeitsplatz auf einfache Weise in vertikaler Richtung geführt werden kann, um diese anzuheben und abzusenken.

Besondere Vorteile ergeben sich, wenn der Hubantrieb in Fahrzeugquerrichtung zwischen den beiden Führungsprofilen angeordnet ist. Dies ermöglicht eine bauraumsparende Anordnung des Hubantriebs und des zwischen dem Hubantrieb und dem Antriebsteil angeordneten Federelements in Fahrzeugquerrichtung.

Weitere Vorteile ergeben sich, wenn der Hubantrieb in Fahrzeuglängsrichtung zumindest teilweise innerhalb der Abmessungen der Führungsprofile angeordnet ist. Dies ermöglicht eine bauraumsparende Anordnung des Hubantriebs und des zwischen dem Hubantrieb und dem Antriebsteil angeordneten Federelements in Fahrzeuglängsrichtung.

Gemäß einer vorteilhaften Ausführungsform der Erfindung sind die beiden Führungsprofile mittels einer vertikalen Verbindungsverstrebung miteinander verbunden, die an dem Antriebsteil befestigt ist, wobei der Hubantrieb mittels der Linearführung in vertikaler Richtung bewegbar an der Verbindungsverstrebung angeordnet ist und der Hubantrieb unter Zwischenschaltung des Federelements in vertikaler Richtung an der Verbindungsverstrebung abgestützt ist. Die Verbindungsverstrebung, die mit den den Standmast bildenden Führungsprofilen versehen ist, bildet - sofern die Verbindungsverstrebung am Antriebsteil befestigt ist - einen Bestandteil des Antriebsteils. An der Verbindungsverstrebung kann auch auf einfache Weise der Hubantrieb mittels der Linearführung in vertikaler Richtung bewegbar angeordnet werden und unter Zwischenschaltung des Federelements in vertikaler Richtung abgestützt werden. Dies ermöglicht es weiterhin auf einfache Weise, die gefederte Ausführung des anhebbaren Fahrerarbeitsplatzes als Sonderausstattung des Flurförderzeugs anzubieten und im Flurförderzeug einzubauen. Vorteilhafterweise ist die Verbindungsverstrebung mittels Schraubverbindungen an dem Antriebsteil befestigt. Dadurch kann auf einfache Weise die mit dem Standmast versehene Verbindungsverstrebung am Antriebsteil befestigt werden, um eine Ausführung des Flurförderzeugs mit einem gefederten anhebbaren und absenkbaren Fahrerarbeitsplatz herzustellen.

Bevorzugt ist die Verbindungsverstrebung mittels Schraubverbindungen an zwei vertikal angeordneten Säulen des Antriebsteils befestigt, die voneinander in Fahrzeugquerrichtung beabstandet sind. Dies ermöglicht es, an den beiden vertikalen Säulen des Antriebsteils auf einfache Weise die Verbindungsverstrebung für eine Ausführung des Flurförderzeugs mit einem anhebbaren und absenkbaren Fahrerarbeitsplatz zu befestigen oder alternativ einen nicht-anhebbaren Fahrerarbeitsplatz für eine Ausführung des Flurförderzeugs mit einem nicht-anhebbaren Fahrerarbeitsplatz zu befestigen.

Die Linearführung ist gemäß einer vorteilhaften Ausführungsform der Erfindung von zumindest zwei Halbschalen gebildet, in denen der Hubantrieb bewegbar angeordnet ist. In zwei Halbschalen, die den Hubantrieb bzw. das Zylindergehäuse eines als Hydraulikzylinders ausgebildeten Hubantriebs umschließen, kann der Hubantrieb auf einfache und in kostengünstiger Weise in vertikaler Richtung bewegbar am Antriebsteil angeordnet werden.

Das Federelement ist gemäß einer vorteilhaften Ausgestaltungsform der Erfindung als Luftfeder ausgebildet. Alternativ kann das Federelement als Elastomerfeder, Magnetfeder, Drehstabfeder oder Schraubendruckfeder ausgebildet sein.

Die Luftfeder ist vorteilhafterweise im Einstelldruck veränderbar, wobei durch die Veränderung des Einstelldruckes eine Anpassung des Federungsverhaltens erzielt wird. Dies ermöglicht es auf einfache Weise, die Steifigkeit der Luftfeder und somit die Steifigkeit des gefederten Fahrerarbeitsplatzes an unterschiedliche Bedingungen anzupassen, beispielsweise an das Körpergewicht des auf der Fahrstandplattform befindlichen Fahrers oder an das Maß der Bodenunebenheiten, auf denen das Flurförderzeugs betrieben wird.

Diese Einstellbarkeit der Steifigkeit der Luftfeder kann manuell von dem Fahrer vorgenommen werden. Es ist auch möglich, die Steifigkeit der Luftfeder automatisch einzustellen und die Steifigkeit mittels einer geeigneten Vorrichtung automatisch zu regeln, so dass die Federsteifigkeit des gefederten anhebbaren und absenkbaren Fahrerarbeitsplatzes automatisch an das Körpergewicht des Fahrers oder an das Maß der Bodenunebenheiten angepasst werden kann. Bei einer Luftfeder kann die Steifigkeit auf einfache Weise durch Verändern des Luftdruckes erzielt werden.

Gemäß einer vorteilhaften Ausgestaltungsform der Erfindung ist die Luftfeder als Balgzylinder, insbesondere als Einfaltenbalgzylinder, ausgebildet. Derartige Balgzylinder ermöglichen bei geringem Bauaufwand und geringem Bauraumbedarf eine einstellbare Federung des Fahrerarbeitsplatzes, wobei durch einfaches Veränderung des Luftdruckes in dem Balgzylinder die Federungseigenschaften auf einfache und schnelle Weise verändert und angepasst werden können.

Zweckmäßigerweise ist hierzu die Luftfeder mit einem Ventil zum Anschluss an eine Luftpumpe oder eine stationäre Druckluftversorgung versehen. Gattungsgemäße Flurförderzeuge werden in der Regel innerhalb von Fabrikhallen und Fabrikanlagen eingesetzt, in denen eine stationäre Druckluftversorgung vorhanden ist. Durch das Ventil und einen üblichen Ventilanschlussstutzen kann somit die Luftfeder auf einfache Weise über die stationäre Druckluftversorgung oder eine manuell betätigte Luftpumpe im Einstelldruck verändert und somit das Federungsverhalten angepasst und verändert werden.

Sofern das Flurförderzeug universell eingesetzt werden soll, ist es gemäß einer zweckmäßigen Ausgestaltung der Erfindung ebenfalls möglich, in dem Flurförderzeug einen Druckluftkompressor vorzusehen, der mit der Luftfeder verbunden ist, so dass die Luftfeder mit einer fahrzeuginternen Druckluftversorgung aufgepumpt werden kann, um eine Anpassung der Federungsverhalten des Fahrerarbeitsplatzes zu erzielen.

Besondere Vorteile ergeben sich, wenn die Fahrerarbeitsplatz zusätzlich zur der Fahrerstandplattform mit einem Bedienlenker und/oder einem Armaturenbrett und/oder einer Rückenlehne versehen ist. Der Fahrerarbeitsplatz, der aus der Fahrerstandplattform, dem Bedienlenker, beispielsweise einem Lenkrad, einem Armaturenbrett und einer Rückenlehne besteht, bildet somit die gesamte Fahrerarbeitsplatzumgebung, die erfindungsgemäß gefedert ist, so dass die Federungseigenschaften die gesamte Fahrerarbeitsplatzumgebung einbeziehen. Die Rückenlehne kann hierbei zusätzlich einen Klappsitz oder einen Anlehnsitz umfassen.

Die Erfindung weist eine Reihe von Vorteilen auf:
Die erfindungsgemäße Federung des anhebbaren Fahrerarbeitsplatzes besteht aus einem Hubantrieb, der in einer Linearführung in vertikaler Richtung bewegbar an dem Antriebsteil angeordnet ist, und einem zwischen dem Hubantrieb und dem Antriebsteil angeordneten Federelement, bevorzugt einer Luftfeder. Dies führt zu einem einfachen und kostengünstigen Aufbau der Federung für den anhebbare/absenkbare Fahrerarbeitsplatz.

Die Federungseigenschaften des anhebbaren/absenkbaren Fahrerarbeitsplatzes sind an dem Hubantrieb und somit der Hubfunktion des anhebbaren Fahrerarbeitsplatzes umgesetzt und ermöglichen eine Verbesserung des Komforts für die auf der Fahrerstandplattform stehenden Bedienperson, da Schwingungen und Stöße, die auf den Fahrer einwirken, von dem Federelement gedämpft werden.

Mit dem zwischen dem Hubantrieb und dem Antriebsteil angeordneten Federelement, in Verbindung mit dem vertikal bewegbaren Hubantrieb, kann eine Federung und somit eine Komfortverbesserung für den auf der Fahrerstandplattform befindlichen Fahrer sowohl im Fahrbetrieb des Flurförderzeugs unabhängig von der Hubhöhe und somit bei jeder Hubhöhe des Fahrerarbeitsplatzes bei der Fahrt über Bodenunebenheiten als auch beim Stopp eines Senkenvorgangs des Fahrerarbeitsplatzes erzielt werden.

Die Federungseigenschaften und Dämpfungseigenschaften sowie der Federweg sind für jede Hubhöhe des Fahrerarbeitsplatzes dieselben.

Bei der Ausführung des Federelements als Luftfeder kann die Steifigkeit des gefederten anhebbaren Fahrerarbeitsplatzes auf einfache Weise direkt an der Luftfeder verändert und eingestellt werden, beispielsweise mittels einer Luftpumpe.

Die erfindungsgemäße Federung des anhebbaren Fahrerarbeitsplatzes weist nur einen geringen Bauaufwand und einen geringen Bauraumbedarf auf, so dass die erfindungsgemäße Federungsfunktion des Fahrerarbeitsplatzes zu keiner negativen Beeinträchtigung und Einschränkung des Fahrerraums führt.

Zudem ist die erfindungsgemäße Federungsfunktion des Fahrerarbeitsplatzes aufgrund des einfachen Aufbaus für den Fahrer und für Servicetechniker einfach zu verstehen, im Vergleich zu einem hydraulischen Federungssystem mit einem Hydrospeicher.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer perspektivischen Darstellung,
- Figur 2: einen Ausschnitt der Figur 1 in einer perspektivischen Darstellung in einer Stellung mit abgesenktem Fahrerarbeitsplatz,
- Figur 3: die Figur 2 in einer Stellung mit angehobenem Fahrerarbeitsplatz,
- Figur 4: einen Ausschnitt der Figuren 1 bis 3,
- Figur 5: eine Darstellung gemäß der Figur 2 mit einer Verdeutlichung des Federweges des Fahrerarbeitsplatzes,
- Figuren 6a, 6b: Seitenansichten des Antriebsteils des erfindungsgemäßen Flurförderzeugs,
- Figur 7: einen Ausschnitt der Figur 4 und
- Figur 8: die Figur 7 in einer Explosionsdarstellung.

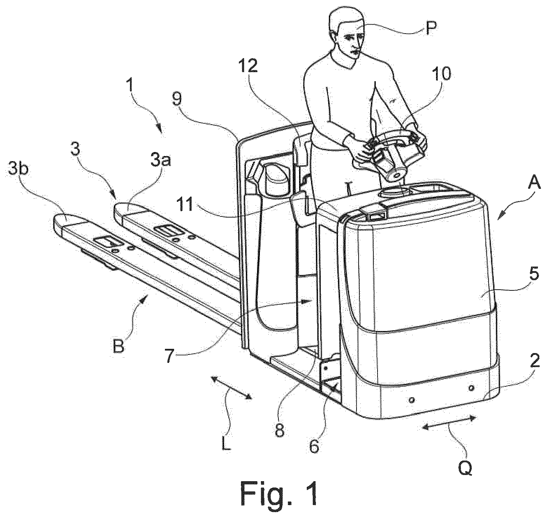

Die Figur 1 zeigt ein erfindungsgemäßes Flurförderzeug 1. Das Flurförderzeug 1 ist im dargestellten Ausführungsbeispiel als Kommissionierer oder Hubwagen ausgebildet.

Das Flurförderzeug 1 weist einen Antriebsteil A und einen relativ zum Antriebsteil A anhebbaren bzw. absenkbaren Lastteil B auf. Der Antriebsteil A weist als tragendes Bauteil einen Rahmen 2 auf. Der Lastteil B weist als tragendes Bauteil einen von zwei Lastgabeln 3a, 3b gebildeten Lastrahmen 3 auf. Die beiden Lastgabeln 3a, 3b sind in Fahrzeugquerrichtung Q voneinander beabstandet und mittels einer nicht näher dargestellten Hubeinrichtung relativ zu dem Antriebsteil A anhebbar und absenkbar.

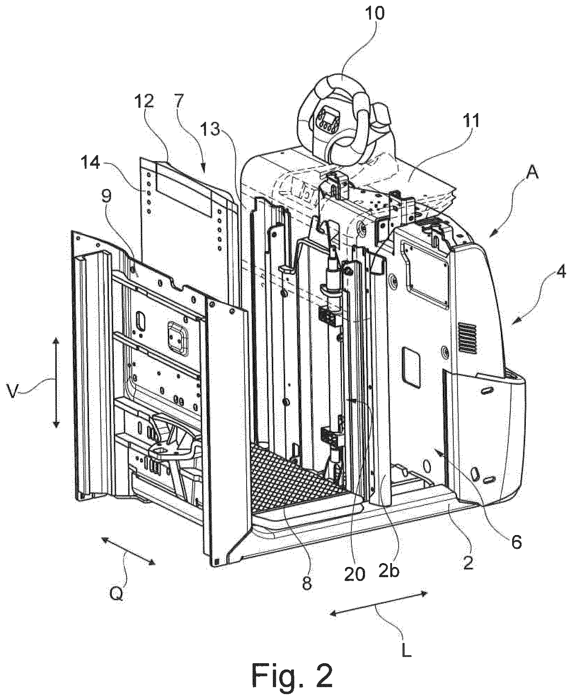

In den Figuren 2 bis 6b ist der Antriebsteil A des erfindungsgemäßen Flurförderzeugs 1 näher dargestellt.

An dem vorderen Bereich des Antriebsteils A ist unter einer Haube 5 ein Aggregateraum 4 ausgebildet, in dem ein elektrisch angetriebenes und lenkbares Antriebsrad angeordnet ist, mit dem sich der Antriebsteil A auf einer Fahrbahn abstützt. Unter der Haube 5 sind in dem Aggregateraum 4 weitere Aggregate angeordnet, beispielsweise eine Leistungselektronikeinheit und ein elektrischer Hubmotor zum Antrieb einer Hydraulikpumpe, mittels der eine Hubeinrichtung zum Anheben und Absenken des Lastrahmens 3 relativ zum Rahmen 2 versorgbar ist.

In Längsrichtung L des Flurförderzeugs 1 benachbart zum Aggregateraum 4 ist am Antriebsteil A ein Batteriefach 6 zur Aufnahme einer Traktionsbatterie ausgebildet, der ein elektrisches Antriebssystem des Flurförderzeugs 1 mit elektrischer Energie versorgt.

In Längsrichtung L des Flurförderzeugs 1 benachbart zum Batteriefach 6 ist am Antriebsteil A ein Fahrerarbeitsplatz 7 ausgebildet, der eine Fahrerstandplattform 8 für eine stehende Bedienperson P umfasst, auf der die Bedienperson P steht.

Am hinteren Bereich des Antriebsteil A ist in Längsrichtung L des Flurförderzeugs 1 benachbart zu dem Fahrerarbeitsplatz 7 eine vertikale Rückwand 9 angeordnet, an der der anhebbare und absenkbare Lastrahmen 3 vertikal geführt ist.

An dem Antriebsteil A des Flurförderzeugs 1 ist somit der die Fahrerstandplattform 8 umfassende Fahrerarbeitsplatz 7 in Längsrichtung L des Flurförderzeugs 1 zwischen dem Batteriefach 6 der Traktionsbatterie und der vertikalen Rückwand 9 des Antriebsteils A angeordnet.

Der Fahrerarbeitsplatz 7 umfasst im dargestellten Ausführungsbeispiel zusätzlich zur Fahrerstandplattform 8 weiterhin einen Bedienlenker 10, ein Armaturenbrett 11 und eine Rückenlehne 12. An dem dem Batteriefach 6 zugewandten vorderen Ende der Fahrerstandplattform 8 ist hierzu eine in Fahrzeugquerrichtung Q ausgerichtete vertikale Wand 13 angeordnet, die mit dem Armaturenbrett 11 und dem Bedienlenker 10 versehen ist. Das Armaturenbrett 11 erstreckt sich nach vorn und bildet eine obere Abdeckung des Batteriefachs 6. An dem der vertikalen Rückwand 9 des Antriebsteils A zugewandten hinteren Ende der Fahrerstandplattform 8 ist hierzu eine in Fahrzeugquerrichtung Q ausgerichtete vertikale Wand 14 angeordnet, die mit der Rückenlehne 12 versehen ist. An der vertikalen Wand 14 kann weiterhin noch eine Anlehnhilfe und/oder ein Klappsitz angeordnet werden.

Der Fahrerarbeitsplatz 7 ist - wie in den Figuren 2 bis 4 näher dargestellt ist - mittels eines Hubantriebs 20 an dem Antriebsteil A anhebbar und absenkbar angeordnet.

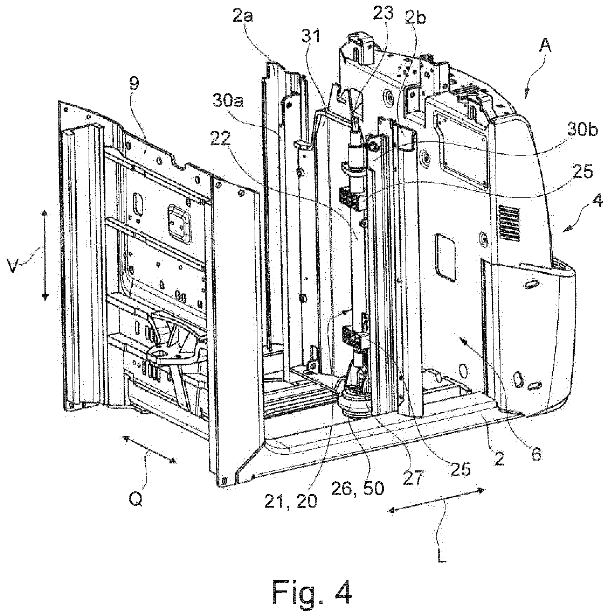

Der Hubantrieb 20 ist - wie in der Figur 4 näher dargestellt ist - als Hydraulikzylinder 21 ausgebildet, der ein Zylindergehäuse 22 und eine ausfahrbare Kolbenstange 23 umfasst. Das Zylindergehäuse 22 ist an dem Antriebsteil A angeordnet. Die ausfahrbare Kolbenstange 23 steht mit dem Fahrerarbeitsplatz 7 in Verbindung und kann diesen Anheben und Absenken.

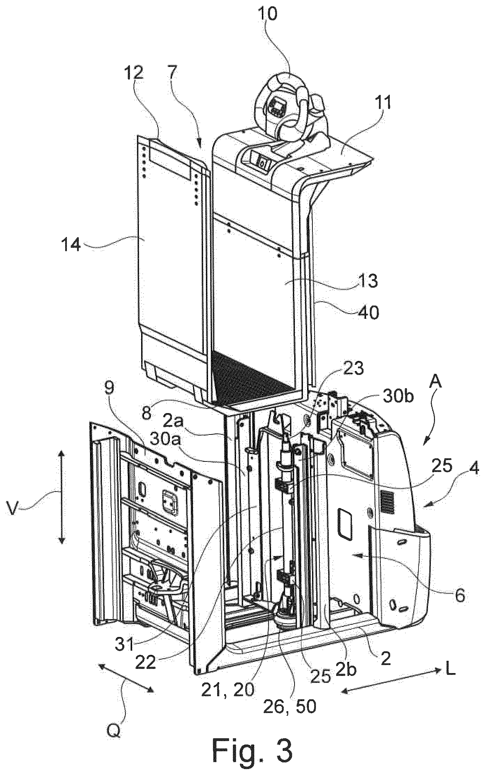

Die Figur 2 zeigt den Fahrerarbeitsplatz 7 in der abgesenkten Stellung. In der Figur 3 ist der Fahrerarbeitsplatz 7 in der angehobenen Stellung dargestellt.

Der Fahrerarbeitsplatz 7 ist weiterhin als gefederter bzw. gedämpfter Fahrerarbeitsplatz 7 ausgebildet. Der Aufbau der Federungsfunktion des Fahrerarbeitsplatzes 7 wird im Folgenden anhand der Figuren 2 bis 8 näher beschrieben.

Für die Federung des Fahrerarbeitsplatzes 7 ist der Hubantrieb 20 mittels einer Linearführung 25 in vertikaler Richtung V bewegbar an dem Antriebsteil A angeordnet und geführt und der Hubantrieb 20 ist unter Zwischenschaltung eines Federelements 26 in vertikaler Richtung V an dem Antriebsteils A abgestützt. Das Federelement 26 ist somit zwischen dem Antriebsteil A und dem Hubantrieb 20 angeordnet.

Im dargestellten Ausführungsbeispiel ist das Zylindergehäuse 22 des als Hydraulikzylinder 21 ausgebildeten Hubantriebs 20 mittels der Linearführung 25 in vertikaler Richtung V bewegbar an dem Antriebsteil A angeordnet und geführt. Das Zylindergehäuse 22 des als Hydraulikzylinder 21 ausgebildeten Hubantriebs 20 ist weiterhin unter Zwischenschaltung des Federelements 26 in vertikaler Richtung V an dem Antriebsteils A abgestützt. Die ausfahrbare Kolbenstange 23 des als Hydraulikzylinder 21 ausgebildeten Hubantriebs 20 ist mit dem anhebbaren und absenkbaren Fahrerarbeitsplatz 7 verbunden.

Das Federelement 26 ist an der Unterseite des Hubantriebs 20 angeordnet, im dargestellten Ausführungsbeispiel an der Unterseite des Zylindergehäuses 22. Das Zylindergehäuse 22 ist hierzu am unteren Ende mit einem steigbügelartigen Fuß 27 versehen, mit dem das Zylindergehäuse 22 auf der Oberseite des Federelements 26 aufsteht. Das Federelement 26 steht mit der Unterseite auf dem Antriebsteil A auf.

Das Antriebsteil A ist mit zwei vertikalen Führungsprofilen 30a, 30b versehen, die in Fahrzeugquerrichtung Q voneinander beabstandet sind und an denen der Fahrerarbeitsplatz 7 anhebbar und absenkbar geführt ist. Die beiden Führungsprofile 30a, 30b bilden somit einen Standmast, an denen der Fahrerarbeitsplatz 7 in vertikaler Richtung geführt ist.

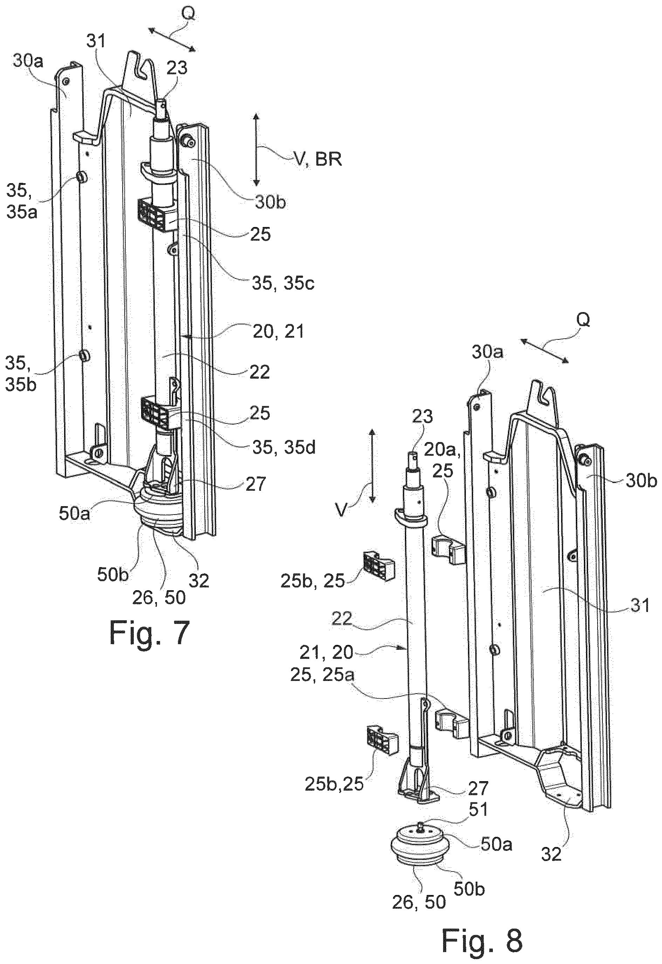

Die beiden Führungsprofile 30a, 30b sind - wie in den Figuren 7 und 8 näher ersichtlich ist - mittels einer vertikalen Verbindungsverstrebung 31 miteinander verbunden. Die Verbindungsverstrebung 31 ist - wie in den Figuren 3 und 4 näher dargestellt ist - an dem Antriebsteil A befestigt und bildet somit einen Bestandteil des Antriebsteils A. Der Hubantrieb 20 ist mittels der Linearführung 25 in vertikaler Richtung V bewegbar an der Verbindungsverstrebung 31 angeordnet und der Hubantrieb 20 ist unter Zwischenschaltung des Federelements 26 in vertikaler Richtung an der Verbindungsverstrebung 31 abgestützt. Die Verbindungsverstrebung 31 ist hierzu im unteren Bereich mit einer Aufstandsplatte 32 versehen, auf der das Federelement 26 mit der Unterseite aufsteht. Das Federelement 26 kann an der Aufstandsplatte 32 weiterhin befestigt sein, beispielsweise mittels Befestigungsschrauben.

Die Verbindungsverstrebung 31 ist im dargestellten Ausführungsbeispiel mittels mehrerer Schraubverbindungen 35a-35d, die eine Befestigungsschnittstelle 35 bilden, an dem Antriebsteil A befestigt. Die Verbindungsverstrebung 31 ist im dargestellten Ausführungsbeispiel mittels der Schraubverbindungen 35a-35d an zwei vertikal angeordneten Säulen 2a, 2b des Antriebsteils 2 befestigt, die voneinander in Fahrzeugquerrichtung Q beabstandet sind. Die beiden vertikalen Säulen 2a, 2b sind im dargestellten Ausführungsbeispiel in Fahrzeuglängsrichtung L zwischen dem Batteriefach 6 und dem Fahrerarbeitsplatz 7 angeordnet und somit vor dem Fahrerarbeitsplatz 7. An den Säulen 2a, 2b und der Verbindungsverstrebung 31 sind hierzu entsprechende Löcher ausgebildet, in denen die Schraubverbindungen 35a-35d angeordnet werden können.

An den vertikalen Führungsprofilen 30a, 30b ist der Fahrerarbeitsplatz 7 im Bereich der vorderen vertikalen Wand 13 geführt. An der Wand 13 können hierzu vertikale Führungsprofile 40 angeordnet sein, die einen Ausfarmast bilden. Nicht näher dargestellte Führungsrollen führen die den Ausfahrmast bildenden Führungsprofile 40 in den den Standmast bildenden Führungsprofilen 30a, 30b.

Der Hubantrieb 20 ist in Fahrzeugquerrichtung Q ist - wie in den Figuren 3, 4 und 7 ersichtlich ist - zwischen den beiden Führungsprofilen 30a, 30b angeordnet.

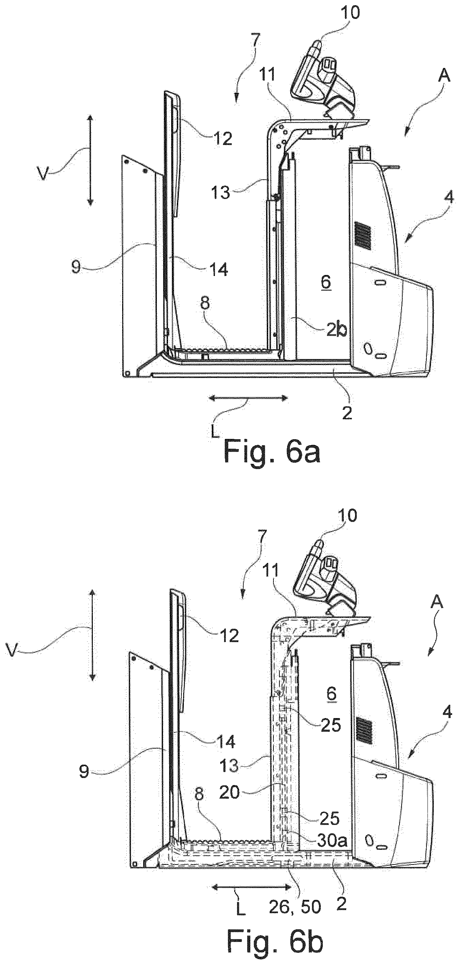

In Fahrzeuglängsrichtung L ist der Hubantrieb 20 zumindest teilweise innerhalb der Abmessungen der Führungsprofile 30a, 30b angeordnet, wie insbesondere in der Figur 6b ersichtlich ist.

Aus der Figur 6b ist weiterhin ersichtlich, dass in der abgesenkten Stellung des Fahrerarbeitsplatzes 7 das Federelement 26 in vertikaler Richtung V unterhalb der Fahrerstandplattform 8 angeordnet ist.

Die Linearführung 25 ist - wie in der Figur 8 näher ersichtlich ist - von zumindest zwei Halbschalen 25a, 25b gebildet, in denen der Hubantrieb 20 bewegbar angeordnet ist. Die Halbschalen 25a, 25b umschließen hierbei das Zylindergehäuse 22 des Hubzylinders 21. Die Halbschale 25a ist an der Verbindungsverstrebung 31 demontierbar befestigt und die Halbschale 25b ist an der Halbschale 25a demontierbar befestigt. Im dargestellten Ausführungsbeispiel sind zwei in vertikaler Richtung V voneinander beabstandet angeordnete Linearführungen 25 vorgesehen, die jeweils aus zwei Halbschalen 25a, 25b bestehen.

Das Federelement 26 ist im dargestellten Ausführungsbeispiel als Luftfeder 50 ausgebildet. Die Luftfeder 50 ist hierbei in vertikaler Richtung V angeordnet und weist eine vertikale Betätigungsrichtung BR auf.

Die Luftfeder 50 ist von einem Balgzylinder gebildet, beispielsweise einem Einfaltenbalgzylinder, der zwischen zwei Anschlussplatten 50a, 50b angeordnet ist. Mittels der unteren Anschlussplatte 50b ist die Luftfeder 50 an der Aufstandsplatte 32 abgestützt und befestigt. Das Zylindergehäuse 22 ist mittels des steigbügelartigen Fuß 27 an der oberen Anschlussplatte 50a abgestützt und befestigt.

Die Luftfeder 50 ist im Einstelldruck und somit in der Federsteifigkeit veränderbar, um eine Anpassung an das Körpergewicht der Bedienperson P und/oder an Fahrbahnunebenheiten zu ermöglichen. Zur Veränderung des Einstelldruckes der Luftfeder 50 ist der Balgzylinder an der oberen Anschlussplatte 50a mit einem Ventil 51 versehen, beispielsweise einem üblichen Ventilanschlussstutzen. Das Ventil 51 ermöglicht eine Veränderung des Luftdruckes im Inneren der Luftfeder 50 ermöglicht.

Der Fuß 27 ist hierbei mit einer bohrungsförmigen Ausnehmung versehen, durch die sich das Ventil 51 erstreckt.

Wie aus den Figuren 2 bis 8 ersichtlich ist, ist bei dem erfindungsgemäßen Flurförderzeug 1 der Hubantrieb 20, mit dem der Fahrerarbeitsplatz 7 angehoben und abgesenkt werden kann, über das als Luftfeder 50 ausgebildete Federelement 26, das zwischen dem Antriebsteil A und dem Hubantrieb 20 angeordnet ist, gefedert und gedämpft. Der gefederte/gedämpfte Hubantrieb 20 ist mit dem Zylindergehäuse 22 an dem Standmast, an dem der Fahrerarbeitsplatz 7 anhebbar und absenkbar angeordnet ist und der von den beiden Führungsprofilen 30a, 30b und der Verbindungsverstrebung 31 gebildet ist und der mittels der Befestigungsschnittstelle 35 an den Säulen 2a, 2b des Antriebsteils A befestigt ist, mittels der Linearführung 25 in vertikaler Richtung bewegbar angeordnet.

Durch die Befestigung des Standmastes des anhebbaren Fahrerarbeitsplatzes 7 an dem Antriebsteil A mittels der Befestigungsschnittstelle 35 ist ein modularer Aufbau erzielbar, bei dem der anhebbare Fahrerarbeitsplatz 7 auf einfache Weise an den Säulen 2a, 2b des Antriebsteils A als Ausstattungsoption des Flurförderzeugs 1 angebaut werden kann. Mit dem Standmast, der von den beiden Führungsprofilen 30a, 30b und der Verbindungsverstrebung 31 gebildet ist, können unterschiedliche Ausführungen von Ausfahrmasten, beispielsweise ein einziger Ausfahrmast oder zwei Ausfahrmaste, und somit unterschiedliche Varianten von Fahrerarbeitsplätzen 7 gekoppelt werden, um verschiedene Fahrerarbeitsplätze 7 mit unterschiedlichen maximalen Hubhöhen herstellen zu können.

Die Figur 3 zeigt den angehobenen Fahrerarbeitsplatz 7 in der oberen Endstellung. Die Figur 2 zeigt den Fahrerarbeitsplatz 7 in der abgesenkten Stellung, wobei der Standmast mit dem Hubantrieb 20, der hinter der vorderen vertikalen Wand 13 des Fahrerarbeitsplatzes 7 angeordnet ist, transparent dargestellt ist.

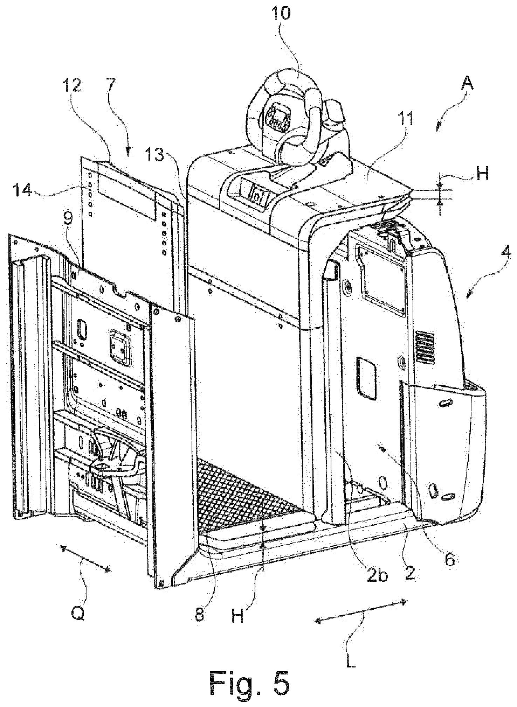

Die erfindungsgemäße Federungsfunktion des Fahrerarbeitsplatzes 7 arbeitet wie folgt. Das Zylindergehäuse 22 des Hubantriebs 20 ist an der Linearführung 25 in vertikaler Richtung V geführt und führt eine vertikale Verstellbewegung nach unten aus, wodurch das Federelement 26 komprimiert wird und eine Federung und Dämpfung des Fahrerarbeitsplatzes 7 erzielt wird. Das nach unten fahrende Zylindergehäuse 22 des Hubantriebs 20 nimmt hierbei den Fahrerarbeitsplatz 7 und dessen Komponenten (Fahrerstandplattform 8, Bedienlenker 10, Armaturenbrett 11 und eine Rückenlehne 12) mit, die mit der Kolbenstange 23 des Hubantriebs 20 gekoppelt sind. Der Hub H des Federelements 26 beträgt beispielsweise 30mm. In der Figur 5 ist der Fahrerarbeitsplatz 7 in der oberen Ausgangsposition der Federung und in der unteren Endposition der Federung dargestellt und der Hub H des Federelements 26 und somit des Fahrerarbeitsplatzes 7 veranschaulicht. Durch die Anordnung des Federelements 26 zwischen dem Hubantrieb 20 und dem Antriebsteil A wird der gesamte Fahrerarbeitsplatz 7 mit all seinen Komponenten (Fahrerstandplattform 8, Bedienlenker 10, Armaturenbrett 11 und eine Rückenlehne 12) von dem Federelement 26 gefedert und gedämpft.

Die Erfindung weist eine Reihe von Vorteilen auf.

Das Federelement 26 und der Hubantrieb 20 benötigen nur einen geringen zusätzlichen Bauraumbedarf. Sofern der Hubantrieb 20 in Fahrzeuglängsrichtung L innerhalb der Erstreckung der Führungsprofile 30a, 30b angeordnet ist und das Federelement 26 in der abgesenkten Stellung des Fahrerarbeitsplatzes 7 in vertikaler Richtung V unterhalb der Fahrerstandplattform 8 angeordnet ist, führt das Federelement 26 zu keinen zusätzlichen Beschränkungen des Fahrerraumes im Fahrerarbeitsplatz 7 oberhalb der Fahrerstandplattform 8.

Das Federelement 26 kann auf einfache Weise in die Hubfunktion des Fahrerarbeitsplatzes 7, die von dem Hubantrieb 20 und dem Standmast gebildet ist, eingebaut und integriert werden.

Das Federelement 26 und der Hubantrieb 20 können zudem in der abgesenkten Stellung des Fahrerabeitsplatzes 7 von der vorderen Wand 13 des Fahrerarbeitsplatzes 7 in einfacher Weise abgedeckt werden (Figur 5).

Das Federelement 26 ermöglicht es, dass die Fahrerstandplattform 8 des gefederten Fahrerarbeitsplatzes 7 stets horizontal ausgerichtet ist und der Federungs- und Dämpfungseffekt des Federelements 26 den gesamten Fahrerarbeitsplatz 7 mit all seinen Komponenten (Fahrerstandplattform 8, Bedienlenker 10, Armaturenbrett 11 und eine Rückenlehne 12) umfasst.

Der Federungs- und Dämpfungseffekt und der Federweg des Federelements 26 sind unabhängig von der Hubhöhe des Fahrerarbeitsplatzes 7 und für jede Hubhöhe des Fahrerarbeitsplatzes 7 gleich.

Die Steifigkeit des Federelements 26 und somit die Steifigkeit des gefederten Fahrerarbeitsplatzes 7 kann bei einer Ausführung als Luftfeder 50 auf einfache Weise über das Ventil 51 verändert und eingestellt werden und dadurch auf unterschiedliche Körpergewichte der Fahrer und/oder der Fahrbahnbeschaffenheit angepasst werden.

Weiterhin ist die erfindungsgemäße Federungsfunktion des Fahrerarbeitsplatzes 7 aufgrund des einfachen Aufbaus für den Fahrer des Flurförderzeugs 1 und für einen Servicetechniker einfach zu verstehen.

## Patentansprüche

1. Flurförderzeug (1) mit einem Fahrerarbeitsplatz (7), der eine Fahrerstandplattform (8) für eine stehende Bedienperson (P) umfasst und an einem Antriebsteil (A) des Flurförderzeugs (1) in Längsrichtung (L) des Flurförderzeugs (1) zwischen einem Batteriefach (6) einer Traktionsbatterie und einer vertikalen Rückwand (9) des Antriebsteils (A) angeordnet ist, wobei der Fahrerarbeitsplatz (7) an dem Antriebsteil (A) mittels eines Hubantriebs (20) anhebbar und absenkbar angeordnet ist, **dadurch gekennzeichnet, dass** der Hubantrieb (20) mittels einer Linearführung (25) in vertikaler Richtung (V) bewegbar an dem Antriebsteil (A) angeordnet ist und der Hubantrieb (20) unter Zwischenschaltung eines Federelements (26) in vertikaler Richtung (V) an dem Antriebsteils (A) abgestützt ist.

2. Flurförderzeug nach Anspruch 1, **dadurch gekennzeichnet, dass** der Hubantrieb (20) als Hydraulikzylinder (21) ausgebildet ist, der ein Zylindergehäuse (22) und eine ausfahrbare Kolbenstange (23) umfasst, wobei das Zylindergehäuse (22) mittels der Linearführung (25) in vertikaler Richtung (V) bewegbar an dem Antriebsteil (A) angeordnet ist und das Zylindergehäuse (22) unter Zwischenschaltung des Federelements (26) in vertikaler Richtung (V) an dem Antriebsteil (A) abgestützt ist, wobei die ausfahrbare Kolbenstange (23) mit dem anhebbaren und absenkbaren Fahrerarbeitsplatz (7) verbunden ist.

3. Flurförderzeug nach Anspruch 1 oder 2, **dadurch gekennzeichnet, dass** das Federelement (26) an der Unterseite des Hubantriebs (20) angeordnet ist.

4. Flurförderzeug nach einem der Ansprüche 1 bis 3, **dadurch gekennzeichnet, dass** das Antriebsteil (A) mit zwei vertikalen Führungsprofilen (30a, 30b) versehen ist, die in Fahrzeugquerrichtung (Q) voneinander beabstandet sind und an denen der Fahrerarbeitsplatz (7) anhebbar und absenkbar geführt ist.

5. Flurförderzeug nach Anspruch 4, **dadurch gekennzeichnet, dass** der Hubantrieb (20) in Fahrzeugquerrichtung (Q) zwischen den beiden Führungsprofilen (30a, 30b) angeordnet ist.

6. Flurförderzeug nach Anspruch 4 oder 5, **dadurch gekennzeichnet, dass** der Hubantrieb (20) in Fahrzeuglängsrichtung (L) zumindest teilweise innerhalb der Abmessungen der Führungsprofile (30a, 30b) angeordnet ist.

7. Flurförderzeug nach einem der Ansprüche 4 bis 6, **dadurch gekennzeichnet, dass** die beiden Führungsprofile (30a, 30b) mittels einer vertikalen Verbindungsverstrebung (31) miteinander verbunden sind, die an dem Antriebsteil (A) befestigt ist, wobei der Hubantrieb (20) mittels der Linearführung (25) in vertikaler Richtung (V) bewegbar an der Verbindungsverstrebung (21) angeordnet ist und der Hubantrieb (20) unter Zwischenschaltung des Federelements (26) in vertikaler Richtung (V) an der Verbindungsverstrebung (21) abgestützt ist.

8. Flurförderzeug nach Anspruch 7, **dadurch gekennzeichnet, dass** die Verbindungsverstrebung (31) mittels Schraubverbindungen (35a, 35b, 35c, 35d) an dem Antriebsteil (A) befestigt ist.

9. Flurförderzeug nach Anspruch 8, **dadurch gekennzeichnet, dass** die Verbindungsverstrebung (31) mittels Schraubverbindungen an zwei vertikal angeordneten Säulen (2a, 2b) des Antriebsteils (A) befestigt ist, die voneinander in Fahrzeugquerrichtung (Q) beabstandet sind.

10. Flurförderzeug nach einem der Ansprüche 1 bis 9, **dadurch gekennzeichnet, dass** die Linearführung (25) von zumindest zwei Halbschalen (25a, 25b) gebildet ist, in denen der Hubantrieb (20) bewegbar angeordnet ist.

11. Flurförderzeug nach einem der Ansprüche 1 bis 10, **dadurch gekennzeichnet, dass** das Federelement (26) als Luftfeder (50) ausgebildet ist.

12. Flurförderzeug nach Anspruch 11, **dadurch gekennzeichnet, dass** die Luftfeder (50) im Einstelldruck veränderbar ist, wobei durch die Veränderung des Einstelldruckes eine Anpassung des Federungsverhaltens erzielt wird.

13. Flurförderzeug nach Anspruch 11 oder 12, **dadurch gekennzeichnet, dass** die Luftfeder (50) als Balgzylinder, insbesondere als Einfaltenbalgzylinder, ausgebildet ist.

14. Flurförderzeug nach einem der Ansprüche 11 bis 13, **dadurch gekennzeichnet, dass** die Luftfeder (50) mit einem Ventil (51) zum Anschluss an eine Luftpumpe oder eine stationäre Druckluftversorgung versehen ist.

15. Flurförderzeug nach einem der Ansprüche 1 bis 14, **dadurch gekennzeichnet, dass** der Fahrerarbeitsplatz (7) mit einem Bedienlenker (10) und/oder einem Armaturenbrett (11) und/oder einer Rückenlehne (12) versehen ist.

## Claims

1. Industrial truck (1) having a driver's workstation (7) which comprises a driver's standing platform (8) for a standing operating person (P) and which is arranged on a drive part (A) of the industrial truck (1), between a battery compartment (6) of a traction battery and a vertical rear wall (9) of the drive part (A) in a longitudinal direction (L) of the industrial truck (1), wherein the driver's workstation (7) is arranged on the drive part (A) so as to be raisable and lowerable by means of a lifting drive (20), **characterized in that** the lifting drive (20) is arranged, so as to be movable in a vertical direction (V) by means of a linear guide (25), on the drive part (A), and the lifting drive (20) is supported in the vertical direction (V) on the drive part (A) with the interposition of a spring element (26).

2. Industrial truck according to Claim 1, **characterized in that** the lifting drive (20) is configured as a hydraulic cylinder (21) which comprises a cylinder housing (22) and a deployable piston rod (23), wherein the cylinder housing (22) is arranged, so as to be movable in the vertical direction (V) by means of the linear guide (25), on the drive part (A), and the cylinder housing (22) is supported in the vertical direction (V) on the drive part (A) with the interposition of the spring element (26), wherein the deployable piston rod (23) is connected to the raisable and lowerable driver's workstation (7).

3. Industrial truck according to Claim 1 or 2, **characterized in that** the spring element (26) is arranged at the bottom side of the lifting drive (20).

4. Industrial truck according to one of Claims 1 to 3, **characterized in that** the drive part (A) is equipped with two vertical guide profiles (30a, 30b) which are spaced apart from one another in a vehicle transverse direction (Q) and on which the driver's workstation (7) is guided so as to be raisable and lowerable.

5. Industrial truck according to Claim 4, **characterized in that** the lifting drive (20) is arranged between the two guide profiles (30a, 30b) in the vehicle transverse direction (Q).

6. Industrial truck according to Claim 4 or 5, **characterized in that** the lifting drive (20) is arranged at least partially within the dimensions of the guide profiles (30a, 30b) in the vehicle longitudinal direction (L) .

7. Industrial truck according to one of Claims 4 to 6, **characterized in that** the two guide profiles (30a, 30b) are connected to one another by means of a vertical connecting strut (31) which is fastened to the drive part (A), wherein the lifting drive (20) is arranged, so as to be movable in the vertical direction (V) by means of the linear guide (25), on the connecting strut (21), and the lifting drive (20) is supported in the vertical direction (V) on the connecting strut (21) with the interposition of the spring element (26).

8. Industrial truck according to Claim 7, **characterized in that** the connecting strut (31) is fastened by means of screw connections (35a, 35b, 35c, 35d) to the drive part (A).

9. Industrial truck according to Claim 8, **characterized in that** the connecting strut (31) is fastened by means of screw connections to two vertically arranged columns (2a, 2b) of the drive part (A), which columns are spaced apart from one another in the vehicle transverse direction (Q).

10. Industrial truck according to one of Claims 1 to 9, **characterized in that** the linear guide (25) is formed by at least two half-shells (25a, 25b) in which the lifting drive (20) is movably arranged.

11. Industrial truck according to one of Claims 1 to 10, **characterized in that** the spring element (26) is configured as an air spring (50).

12. Industrial truck according to Claim 11, **characterized in that** the air spring (50) is variable in terms of the set pressure, wherein an adaptation of the suspension characteristics is achieved through the variation of the set pressure.

13. Industrial truck according to Claim 11 or 12, **characterized in that** the air spring (50) is configured as a bellows cylinder, in particular as a single-fold bellows cylinder.

14. Industrial truck according to one of Claims 11 to 13, **characterized in that** the air spring (50) is equipped with a valve (51) for connection to an air pump or to a static compressed-air supply.

15. Industrial truck according to one of Claims 1 to 14, **characterized in that** the driver's workstation (7) is equipped with an operating steering handle (10) and/or with a dashboard (11) and/or with a backrest (12).

## Revendications

1. Chariot de manutention (1) doté d'un poste de travail de conducteur (7) qui comprend une plateforme support de conducteur (8) pour un opérateur debout (P) et est disposé au niveau d'une partie motrice (A) du chariot de manutention (1) dans la direction longitudinale (L) du chariot de manutention (1) entre un compartiment de batterie (6) d'une batterie de traction et un panneau arrière vertical (9) de la partie motrice (A), le poste de travail de conducteur (7) étant disposé au niveau de la partie motrice (A) de manière à pouvoir être élevé et abaissé au moyen d'un dispositif d'entraînement de levage (20), **caractérisé en ce que** le dispositif d'entraînement de levage (20) est disposé au niveau de la partie motrice (A) de manière mobile dans la direction verticale (V) au moyen d'un guidage linéaire (25), et **en ce que** le dispositif d'entraînement de levage (20) est soutenu au niveau de la partie motrice (A) dans la direction verticale (V) par interposition d'un élément de ressort (26).

2. Chariot de manutention selon la revendication 1, **caractérisé en ce que** le dispositif d'entraînement de levage (20) est réalisé sous la forme d'un vérin hydraulique (21) qui comprend un corps de cylindre (22) et une tige de piston extensible (23), le corps de cylindre (22) étant disposé au niveau de la partie motrice (A) de manière mobile dans la direction verticale (V) au moyen du guidage linéaire (25), et le corps de cylindre (22) étant soutenu au niveau de la partie motrice (A) dans la direction verticale (V) par interposition de l'élément de ressort (26), la tige de piston extensible (23) étant reliée au poste de travail de conducteur (7) qui peut être élevé et abaissé.

3. Chariot de manutention selon la revendication 1 ou 2, **caractérisé en ce que** l'élément de ressort (26) est disposé sur la face inférieure du dispositif d'entraînement de levage (20).

4. Chariot de manutention selon l'une quelconque des revendications 1 à 3, **caractérisé en ce que** la partie motrice (A) est munie de deux profilés de guidage verticaux (30a, 30b) qui sont espacés l'un de l'autre dans la direction transversale de véhicule (Q) et sur lesquels le poste de travail de conducteur (7) est guidé de manière à pouvoir être élevé et abaissé.

5. Chariot de manutention selon la revendication 4, **caractérisé en ce que** le dispositif d'entraînement de levage (20) est disposé dans la direction transversale de véhicule (Q) entre les deux profilés de guidage (30a, 30b).

6. Chariot de manutention selon la revendication 4 ou 5, **caractérisé en ce que** le dispositif d'entraînement de levage (20) est disposé dans la direction longitudinale de véhicule (L) au moins en partie à l'intérieur des dimensions des profilés de guidage (30a, 30b).

7. Chariot de manutention selon l'une quelconque des revendications 4 à 6, **caractérisé en ce que** les deux profilés de guidage (30a, 30b) sont reliés l'un à l'autre au moyen d'une entretoise de raccordement verticale (31) qui est fixée à la partie motrice (A), le dispositif d'entraînement de levage (20) étant disposé au niveau de l'entretoise de raccordement (21) de manière mobile dans la direction verticale (V) au moyen du guidage linéaire (25), et le dispositif d'entraînement de levage (20) étant soutenu au niveau de l'entretoise de raccordement (21) dans la direction verticale (V) par interposition de l'élément de ressort (26) .

8. Chariot de manutention selon la revendication 7, **caractérisé en ce que** l'entretoise de raccordement (31) est fixée à la partie motrice (A) au moyen de raccords vissés (35a, 35b, 35c, 35d).

9. Chariot de manutention selon la revendication 8, **caractérisé en ce que** l'entretoise de raccordement (31) est fixée au moyen de raccords vissés à deux colonnes (2a, 2b), disposées verticalement, de la partie motrice (A) qui sont espacées l'une de l'autre dans la direction transversale de véhicule (Q).

10. Chariot de manutention selon l'une quelconque des revendications 1 à 9, **caractérisé en ce que** le guidage linéaire (25) est formé par au moins deux demi-coques (25a, 25b) dans lesquelles le dispositif d'entraînement de levage (20) est disposé de manière mobile.

11. Chariot de manutention selon l'une quelconque des revendications 1 à 10, **caractérisé en ce que** l'élément de ressort (26) est réalisé sous la forme d'un ressort pneumatique (50).

12. Chariot de manutention selon la revendication 11, **caractérisé en ce que** le ressort pneumatique (50) est variable au niveau de la pression de réglage, une variation de la pression de réglage aboutissant à une adaptation de la performance de suspension.

13. Chariot de manutention selon la revendication 11 ou 12, **caractérisé en ce que** le ressort pneumatique (50) est réalisé sous la forme d'un vérin à soufflet, en particulier d'un vérin à soufflet à un seul pli.

14. Chariot de manutention selon l'une quelconque des revendications 11 à 13, **caractérisé en ce que** le ressort pneumatique (50) est muni d'une soupape (51) à raccorder à une pompe à air ou à une alimentation en air comprimé stationnaire.

15. Chariot de manutention selon l'une quelconque des revendications 1 à 14, **caractérisé en ce que** le poste de travail de conducteur (7) est muni d'un guidon de commande (10) et/ou d'un tableau de bord (11) et/ou d'un dossier (12).
